# EUROPÄISCHE PATENTSCHRIFT

(11) **EP 2 261 463 B1**
(45) Veröffentlichungstag und Bekanntmachung des Hinweises auf die Patenterteilung: **26.06.2019**
(21) Anmeldenummer: 10002814.1
(22) Anmeldetag: 17.03.2010
(51) Int. Cl.: F01D 5/14, F01D 9/04

(54) **Strömungsmaschine mit einer Schaufelreihengruppe**
Turbomachine with a group of bladed stages
Turbomachine avec groupe d'étages aubagés

(30) Priorität: 28.05.2009 DE 102009023100
(43) Veröffentlichungstag der Anmeldung: 15.12.2010
(73) Patentinhaber: Rolls-Royce Deutschland Ltd & Co KG, 15827 Blankenfelde-Mahlow (DE)
(72) Erfinder: Gümmer, Volker, Dr., 85411 Hohenkammer (DE)
(74) Vertreter: Hoefer & Partner Patentanwälte mbB

(56) Entgegenhaltungen:
- EP-A1- 0 953 728
- WO-A1-2007/042522
- WO-A1-2008/128877
- DE-A1- 3 924 829
- DE-A1-102007 035 726
- US-A- 3 937 592

## Beschreibung

Die Erfindung bezieht sich auf eine Strömungsmaschine gemäß den Merkmalen des Oberbegriffs des Anspruchs 1.

Die aerodynamische Belastbarkeit und die Effizienz von Strömungsmaschinen, insbesondere Bläsern, Verdichtern, Pumpen und Ventilatoren, wird durch das Wachstum und die Ablösung von Grenzschichten in der Nähe und auf den Naben- und Gehäusewänden begrenzt. Der Stand der Technik hält für den Fall hoher aerodynamischer Belastung und starken Grenzschichtwachstums auf den Ringkanalseitenwänden (Nabe oder Gehäuse) nur bedingt Lösungen bereit.

Stand der Technik in Strömungsmaschinen sind Anordnungen mit doppelreihigen Leiträdern, üblicherweise eingesetzt als Austrittsleitrad in Verdichtern, oder auch doppelreihige Rotoranordnungen, bei denen die Rotoren direkt benachbart gegenläufig operieren oder bei denen zwei direkt benachbarte Rotorschaufelreihen auf einer gemeinsamen Trommel befestigt sind. Bei diesen Anordnungen, und insbesondere bei denen, die mehrere direkt benachbarte und relativ zueinander fest angeordnete Schaufelreihen aufweisen (also beispielsweise mehrere Rotorschaufelreihen auf der selben Trommel oder mehrere Statorschaufelreihen), ergeben sich bei höherer aerodynamischer Belastung starke Grenzschichtablösung in der Randzone des Hauptströmungspfades, d. h. an der Naben- oder Gehäusekontur.

Dies ist primär darauf zurückzuführen, dass die in der Mitte des Hauptströmungspfades günstige Anordnung zweier benachbarter Schaufelkanten einer Schaufelreihengruppe zueinander sich in der Nähe der Strömungspfadberandung sehr ungünstig auswirkt.

Die erforderliche Strömungsumlenkung kann entweder in Teilen der Schaufelhöhe oder entlang der gesamten Schaufelhöhe schnell so hoch sein, dass diese konventionelle Anordnung zu frühzeitiger Ablösung der Grenzschichtströmung im Randbereich an Naben- und/oder Gehäusewänden führt.

Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet.

Der Rotor besteht aus einer Reihe oder aus mehreren benachbarten und eine Gruppe bildenden Reihen von Schaufeln, die mit der rotierenden Welle der Maschine verbunden sind und Energie an das Arbeitsmedium abgeben. Der Rotor kann mit Deckband oder mit Laufspalt am äußeren Schaufelende ausgeführt sein. Der Stator besteht aus einer Reihe oder aus mehreren benachbarten und eine Gruppe bildenden Reihen von feststehenden Schaufeln, die nabenseitig wie gehäuseseitig mit festem oder freiem Schaufelende mit Spalt ausgeführt sein können.

Die Rotortrommel und die Beschaufelung sind üblicherweise von einem Gehäuse umgeben, in anderen Fällen, z. B. bei Propellern oder Schiffsschrauben, existiert kein Gehäuse.

Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsmaschine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinander folgenden Rotoren.

Schließlich kann die Strömungsmaschine alternativ eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen.

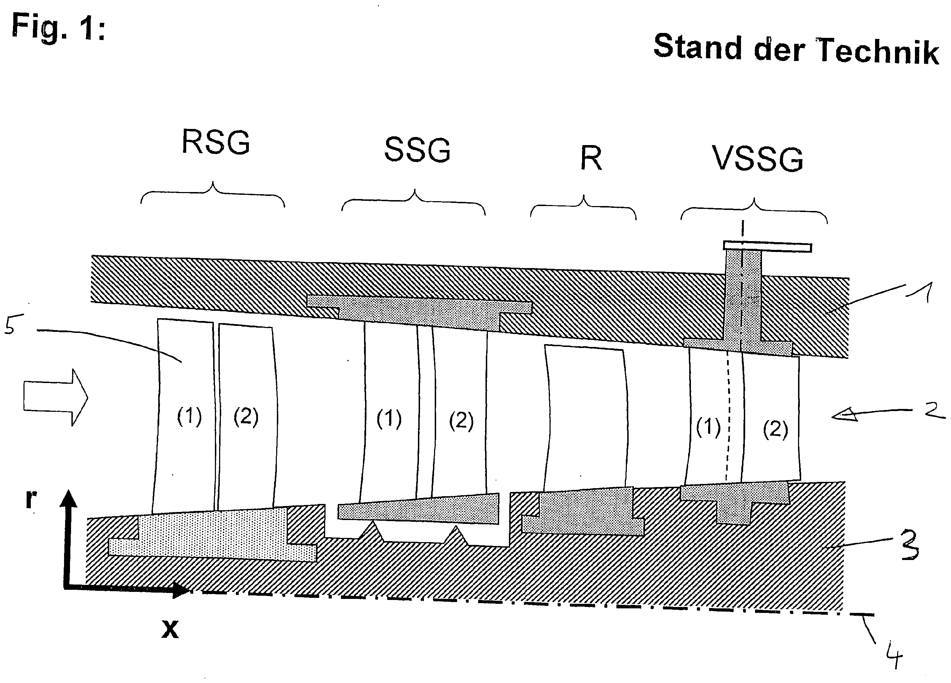

Übliche Schaufelreihen, wie sie in Fig.1 dargestellt sind, ohne zusätzliche Gestaltungsmerkmale zur Stabilisierung der Wandgrenzschichten, sind aufgrund extrem hoher Druckverluste und der Nichterreichung der angestrebten Strömungsumlenkung (beides verursacht durch starke Sekundärströmungen, Grenzschichtablösung und Rückströmung) ungeeignet. Die Konsequenz ist ein insgesamt schlechtes Leistungsverhalten der Strömungsmaschine im Hinblick auf den Wirkungsgrad und die verfügbare Stabilitätsmarge.

Aus der US 3 937 592 A ist eine Strömungsmaschine bekannt, bei welcher Schaufelgruppenreihen mit axial zueinander angeordneten Schaufelgruppen vorgesehen sind. Benachbarte Schaufeln einer Schaufelgruppenreihe eines Rotors weisen einen Kantenabstand auf, welcher am festen Schaufelende minimal ist und sich zu einem Maximalwert in Richtung des freien Schaufelendes vergrößert.

Bei der aus der DE 39 24 829 A1 bekannten Strömungsmaschine weisen die benachbarten Schaufelreihen einer Schaufelreihengruppe eines Rotors radial innenliegend eine Überlappung auf. Diese verkleinert sich und führt am freien, radial außenliegenden Schaufelende zu einem Kantenabstand.

Eine ähnliche Ausgestaltung zeigt die DE 10 2007 035 726 A1. Dabei weisen benachbarte Schaufelreihen einer Schaufelreihengruppe eine Überlappung auf, welche zum freien Schaufelende hin geringer wird.

Die EP 0 953 728 A1 zeigt benachbarte Schaufelreihen einer Schaufelreihengruppe, welche stets einen Kantenabstand aufweisen, welcher im mittleren Bereich minimiert ist und zum freien Schaufelende sowie zum festen Schaufelende hin ansteigt.

Ferner offenbart die WO 2007/042522 A1 einen Rotor und einen Stator einer Strömungsmaschine gemäß dem Oberbegriff des Anspruchs 1 mit einer im mittleren Bereich des Schaufelblattes kleineren Sehnenlänge als im kopfseitigen oder im fussseitigen Bereich des Schaufelblattes.

Der Erfindung liegt die Aufgabe zugrunde, eine Strömungsmaschine der eingangs genannten Art zu schaffen, welche bei einfachem Aufbau und einfacher, kostengünstiger Herstellbarkeit optimierte Strömungsverhältnisse bei hohem Wirkungsgrad aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

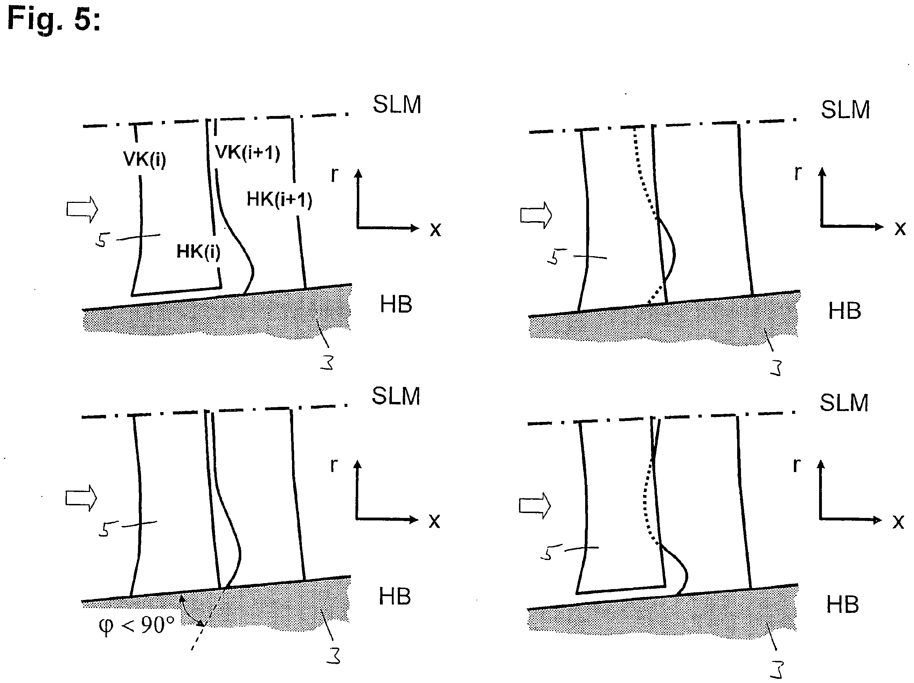

Im Einzelnen umfasst die vorliegende Erfindung eine Schaufelreihengruppe bestehend aus mindestens zwei benachbarten und relativ zueinander fest angeordneten Schaufelreihen (mehrere miteinander rotierende Rotorschaufelreihen oder mehrere Statorschaufelreihen), angeordnet im einem Hauptströmungspfad einer Strömungsmaschine, wobei die Hinterkante mindestens einer Mitgliedsschaufelreihe von der ihr benachbarten Vorderkante der stromabwärts liegenden Mitgliedsschaufelreihe einen ungleichförmigen und wenigstens entlang eines Abschnitts der Schaufelhöhe von der Hauptströmungspfadmittellinie in Richtung der Hauptströmungspfadberandung sich vergrößernden meridionalen Abstand aufweist. Im Folgenden wird die Erfindung anhand von Ausführungsbeispielen in Verbindung mit den Figuren beschrieben, wobei lediglich die Fig. 5, 7, 8 und 10 erfindungsgemäße Anordnungen zeigen. Dabei zeigt:
- Fig. 1:: Schaufelreihengruppen nach dem Stand der Technik,
- Fig. 2:: beispielhafte Schaufelreihengruppen (Übersicht),
- Fig. 3:: weitere Schaufelreihengruppen (Übersicht),
- Fig. 4:: Anordnungen zweier Mitgliedsschaufelreihen,
- Fig. 5:: erfindungsgemäße Anordnungen zweier Mitgliedsschaufelreihen,
- Fig. 6:: weitere Anordnungen zweier Mitgliedsschaufelreihen
- Fig. 7:: eine erfindungsgemäße Definition des Kantenabstandes,
- Fig. 8:: erfindungsgemäße wandnahe Position des maximalen Kantenabstandes,
- Fig. 9:: eine Schaufelreihengruppe (Umfangsbetrachtung),
- Fig. 10:: erfindungsgemäße Schaufelreihengruppe (Umfangsbetrachtung).

Eine konventionelle Schaufelreihengruppe nach dem Stand der Technik, wie sie in Fig. 1 gezeigt ist, besitzt gleichbleibende Abstände zwischen den Schaufelkanten direkt benachbarter Mitglieder der Schaufelreihengruppe.

Die Fig. 1 zeigt in der durch die Axialrichtung x und die Radialrichtung r gebildeten Meridianebene mehrere Schaufelreihengruppen, wobei jede der Schaufelreihengruppen aus jeweils zwei gleichartigen und ihre relative Anordnung zueinander (sowohl in Umfangsrichtung als auch in Meridionalrichtung) nicht ändernden Mitgliedsschaufelreihen besteht. So besteht die Rotorschaufelreihengruppe RSG aus zwei mit gleicher Drehgeschwindigkeit laufenden und miteinander verbundenen Rotorschaufelreihen, das erste Mitglied der Gruppe ist mit (1) und das zweite Mitglied der Gruppe mit (2) gekennzeichnet. Die Statorschaufelreihengruppe SSG besteht aus zwei direkt benachbarten feststehenden Statorschaufelreihen. Die variable Statorschaufelreihengruppe VSSG besteht aus zwei direkt benachbarten Statorschaufelreihen, wobei jeweils eine Schaufel der vorderen Reihe mit einer Schaufel der hinteren Reihe auf einem gemeinsamen Drehteller vorgesehen sind und auf diese Weise gemeinsam um die Drehachse verstellbar sind.

Allen Schaufelreihengruppen nach dem Stand der Technik ist gemeinsam, dass entweder die zwei Mitglieder der Schaufelreihengruppe mit großem Abstand voneinander angeordnet sind, oder aber die einzelnen Mitglieder eng zusammenstehen und der meridionale Abstand von "Hinterkante Mitglied (1)" zu "Vorderkante Mitglied (2)" im Wesentlichen gleichbleibend vorgesehen ist. Insbesondere letztere Konfiguration ist für die Strömung in der Nähe der Hauptströmungspfadberandung (Nabe oder Gehäuse) aber sehr nachteilig.

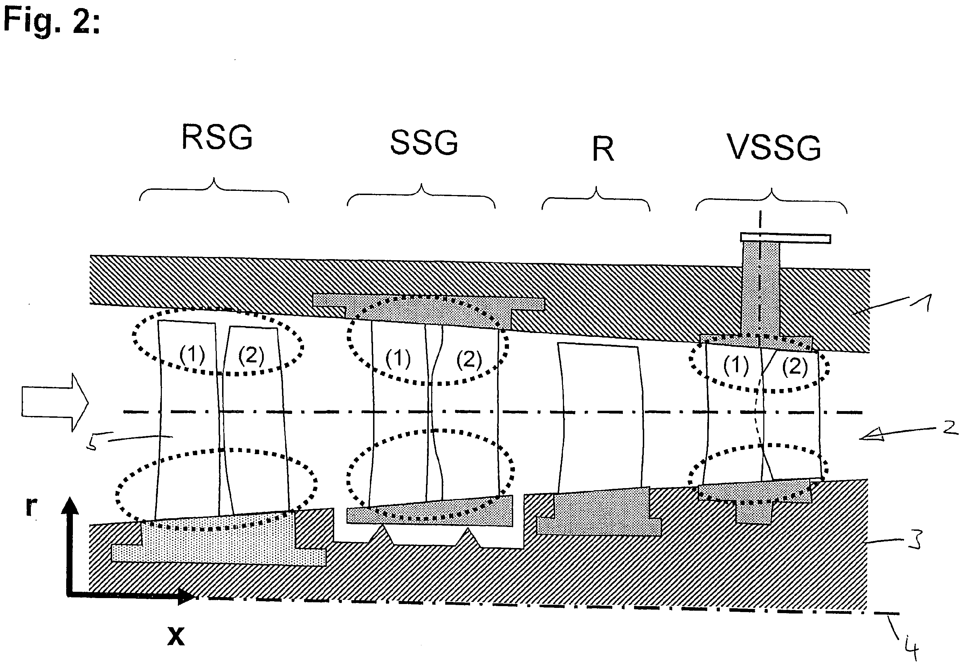

Die Fig. 2 zeigt in der durch die Axialrichtung x und die Radialrichtung r gebildeten Meridianebene mehrere beispielhafte Schaufelreihengruppen, wobei jede der Schaufelreihengruppen aus jeweils zwei gleichartigen und die Relativanordnung zueinander nicht ändernden Mitgliedsschaufelreihen besteht. So besteht die Rotorschaufelreihengruppe RSG aus mindestens zwei mit gleicher Drehgeschwindigkeit laufenden und miteinander verbundenen Rotorschaufelreihen. Die Statorschaufelreihengruppe SSG besteht aus zwei direkt benachbarten feststehenden Statorschaufelreihen. Die variable Statorschaufelreihengruppe VSSG besteht aus zwei direkt benachbarten Statorschaufelreihen. Eine Schaufel einer der Mitgliedsschaufelreihen ist hier mit mindestens einer Schaufel der ihr unmittelbar stromab liegenden Mitgliedsschaufelreihe auf einem gemeinsamen Drehteller vorgesehen. Alternativ können aber auch, wie hier nicht bildlich dargestellt, mindestens zwei, unterschiedlichen Mitgliedsschaufelreihen zugehörige Schaufeln je auf einem individuellen Drehteller angeordnet sein.

Kennzeichnend für die Schaufelreihengruppe ist es, dass der bestehende meridionale Abstand zwischen der Hinterkante mindestens einer Schaufel einer Mitgliedsschaufelreihe (i) und der Vorderkante mindestens einer Schaufel der direkt benachbarten stromabwärts liegenden Mitgliedsschaufelreihe (i+1) in mindestens einem Teil des Bereiches zwischen der Mitte des Hauptströmungspfades und dem Rand des Hauptströmungspfades in Richtung zur Hauptströmungspfadberandung hin größer wird. Dies ist in der Fig. 2 in den dem Hauptströmungspfadrand nahe liegenden Zonen der Rotorschaufelreihengruppe RSG, der Statorschaufelreihengruppe SSG und der variablen Statorschaufelreihengruppe VSSG beispielhaft skizziert und wird im weiteren genauer beschrieben.

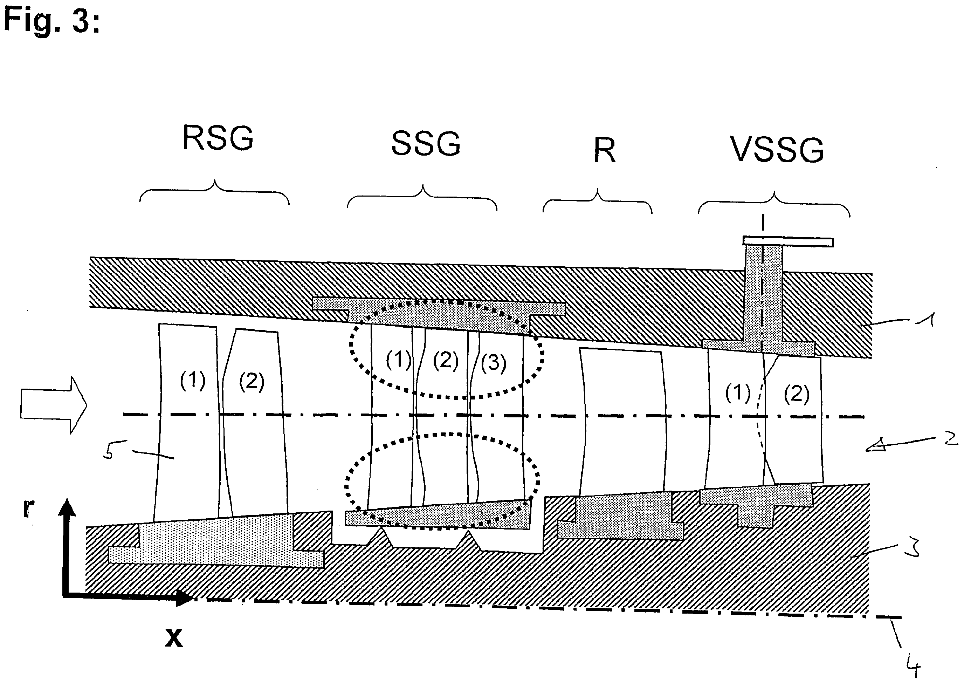

Eine Schaufelreihengruppe kann, wie die Fig. 3 zeigt, auch mehr als zwei Mitgliedsschaufelreihen besitzen, wie hier beispielhaft für die Anzahl 3 an der Statorschaufelreihengruppe SSG dargestellt ist. Dabei zeigt der in der Fig. 3 im Bereich SSG markierte untere Randbereich eine erfindungsgemäße Ausgestaltung einer Schaufelreihengruppe, wobei die weiteren abgebildeten Schaufelreihengruppen beispielhafte Ausgestaltungen zeigen. Wie hier nicht explizit dargestellt ist, kann auch eine Rotorschaufelreihengruppe RSG oder eine variable Statorschaufelreihengruppe mit mehr als 2 Mitgliedsschaufelreihen versehen sein.

Die beschriebene Konfiguration der Schaufelreihengruppe schließt erfindungsgemäß die Möglichkeit ein, dass an mindestens einer Mitgliedsschaufelreihe die Position und/oder die Profiltiefe der Schaufeln entlang des Umfangs variiert.

Vorteilhaft ist es, wenn die Anzahl der Schaufeln zweier benachbarter Mitgliedsschaufelreihen in einem ganzzahligen Verhältnis stehen, das heißt, dass die Anzahl der Schaufeln der Mitgliedsschaufelreihe (i) ein Vielfaches der Anzahl der Schaufeln der Mitgliedsschaufelreihe (i+1) bildet, oder die Anzahl der Schaufeln der Mitgliedsschaufelreihe (i+1) ein Vielfaches der Anzahl der Schaufeln der Mitgliedsschaufelreihe (i) bildet, oder die Anzahl der Schaufeln der Mitgliedsschaufelreihe (i) und die Anzahl der Schaufeln der Mitgliedsschaufelreihe (i+1) gleich sind.

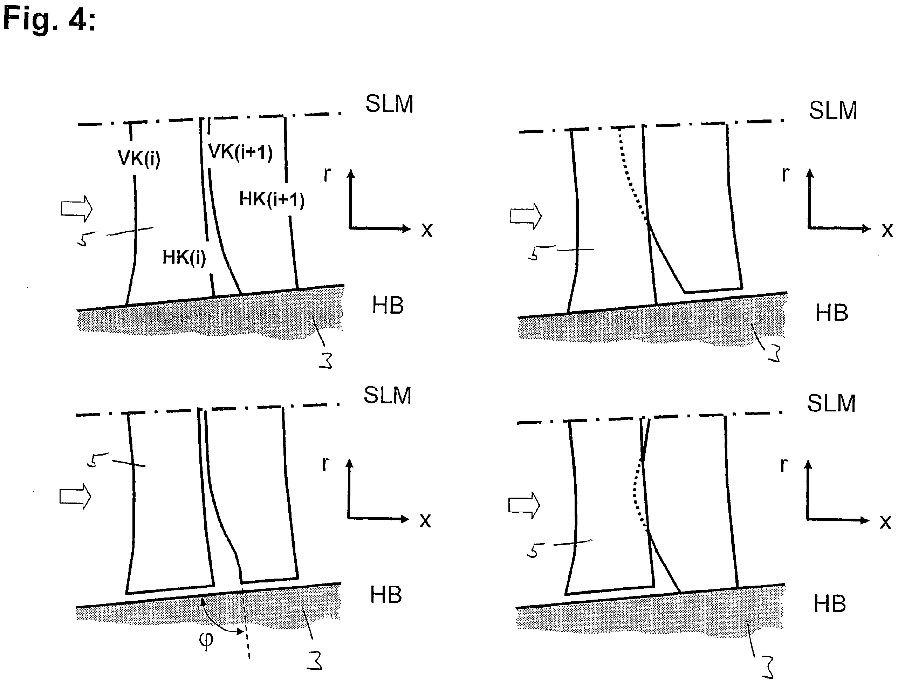

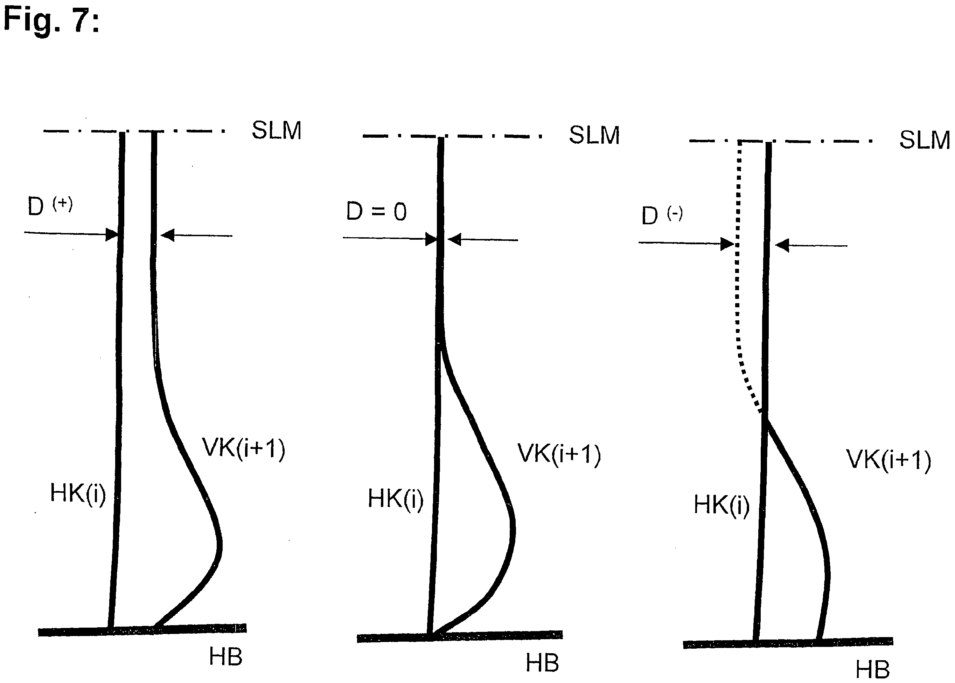

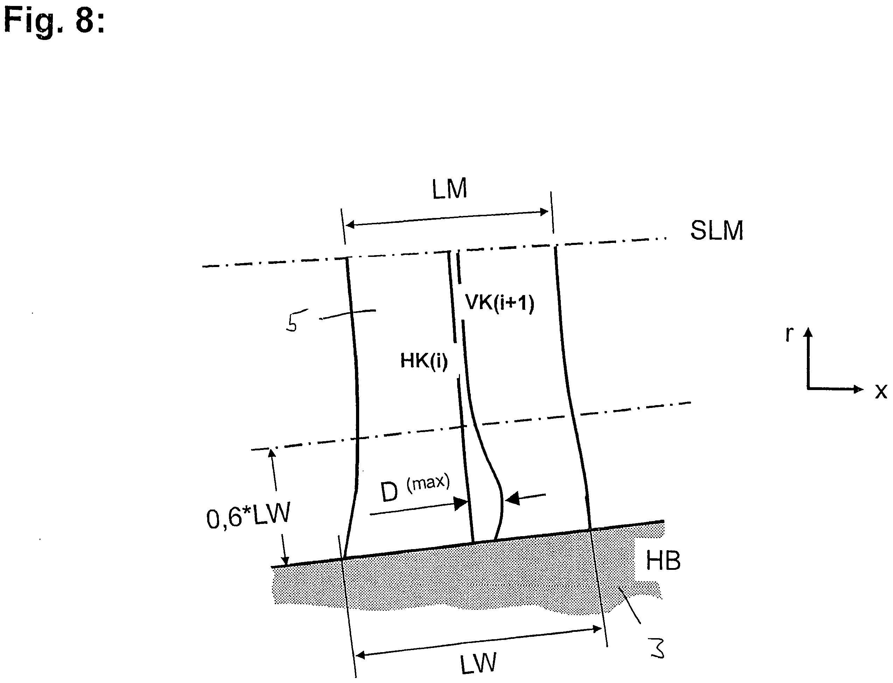

Die Fig. 4 zeigt in der durch die Axialrichtung x und die Radialrichtung r gebildeten Meridianebene vier unterschiedliche Anordnungen von zwei zu einer beispielhaften Schaufelreihengruppe gehörenden und benachbarten Mitgliedsschaufelreihen (i) und (i+1). Die betreffende Schaufelreihengruppe kann folglich insgesamt durchaus mehr als die jeweils dargestellten zwei Mitgliedsschaufelreihen umfassen. Dargestellt ist die beispielhafte Anordnung im Bereich zwischen der Hauptströmungspfadmitte (mittlere Stromlinie SLM), und einer Hauptströmungspfadberandung HB. Die Hauptströmungspfadberandung HB stellt eine Kontur an der Nabe oder am Gehäuse der Strömungsmaschine dar, zum Beispiel an einem Drehteller, einer Wandung, einem Statorfuß, einem Statordeckband, einem Rotorfuß oder einem Rotordeckband. Die Hauptströmungspfadberandung HB ist entweder fest mit dem Ende mindestens einer Mitgliedsschaufelreihe verbunden, oder es ist ein Spalt zwischen der Hauptströmungspfadberandung und mindestens dem Ende einer Mitgliedsschaufelreihe vorgesehen. Jede Anordnung zeigt die zwei Mitgliedsschaufelreihen (i) und (i+1), jeweils mit einer Vorderkante VK und einer Hinterkante HK. Von erfindungsmäßig zentraler Bedeutung ist der Verlauf der Vorderkante VK(i+1) relativ zum Verlauf der Hinterkante HK(i). Erfindungsgemäß günstig ist es, wenn in der Hauptströmungspfadmitte der meridionale Kantenabstand D (siehe Fig. 7) kleiner ist als 5% der stets positiv zu zählenden meridionalen Distanz LM zwischen der Vorderkante VK(i) und der Hinterkante HK(i+1), siehe Fig. 8; alle negativen Werte von D sind folglich ebenfalls erfindungsgemäß, entsprechend einer Lage der Vorderkante VK(i+1) stromauf der Hinterkante HK(i).

Der linke obere Teil der Fig. 4 zeigt zwei Mitgliedsschaufelreihen, die beide fest mit der Hauptströmungspfadberandung verbunden sind. Die Vorderkante VK(i+1) ist in der Nähe der Strömungspfadmitte in einem kleinen aber positiven Abstand D (siehe Fig. 7) von der Hinterkante HK(i) angeordnet. Quer zur Strömung in Richtung der Hauptströmungspfadberandung HB nimmt der meridionale Kantenabstand D in den dargestellten Beispielen kontinuierlich zu und an der Hauptströmungspfadberandung seinen maximalen Wert an. Erfindungsgemäß vorteilhaft ist es, wenn der maximale entlang der Hauptströmungspfadhöhe zwischen der Hauptströmungspfadmitte und der Hauptströmungspfadberandung auftretende meridionale Kantenabstand D wenigstens 2% der zwischen der Vorderkante VK(i) und der Hinterkante HK(i+1) in der Hauptströmungspfadmitte vorgesehenen meridionalen Distanz LM größer ist als der meridionale Kantenabstand D in der Hauptströmungspfadmitte beziehungsweise an der Stelle minimalen Kantenabstandes.

Der linke untere Teil der Fig. 4 zeigt zwei Mitgliedsschaufelreihen, von denen jede zwischen sich und der Hauptströmungspfadberandung einen Spalt aufweist. Die Vorderkante VK(i+1) ist auch hier in der Nähe der Strömungspfadmitte in kleinem Abstand D stromab von der Hinterkante HK(i) angeordnet. In Richtung der Strömungspfadberandung nimmt der meridionale Kantenabstand D kontinuierlich zu, derart, dass die Vorderkante VK(i+1) an der Hauptströmungspfadberandung im Wesentlichen senkrecht zur Hauptströmungspfadberandung ausgerichtet ist, entsprechend einem Neigungswinkel ϕ von 87°< ϕ <= 93°.

Der rechte obere Teil der Fig. 4 zeigt zwei Mitgliedsschaufelreihen, von denen die weiter stromab liegende Reihe an der Hauptströmungspfadberandung einen Spalt aufweist. Die Vorderkante VK(i+1) ist hier in der Nähe der Strömungspfadmitte stromauf der Hinterkante HK(i) angeordnet, resultierend in einem dortigen Wert des meridionalen Kantenabstandes D von kleiner 0. In Richtung der Strömungspfadberandung nimmt der meridionale Kantenabstand D kontinuierlich zu, nimmt ab einer bestimmten Position positive Werte an und ist an der Hauptströmungspfadberandung maximal. Ebenfalls sind beispielhafte Anordnungen mit maximalen Werten von D kleiner null möglich, sofern der zwischen der Mitte und dem Rand vorgesehene Maximalwert von D wenigstens um 2% der zwischen der Vorderkante VK(i) und der Hinterkante HK(i+1) in der Hauptströmungspfadmitte vorgesehenen meridionalen Distanz LM größer ist als der Wert von D in der Hauptströmungspfadmitte. Der rechte untere Teil der Fig. 4 zeigt zwei Mitgliedsschaufelreihen, von denen die weiter stromauf liegende Reihe an der Hauptströmungspfadberandung einen Spalt aufweist. Die Vorderkante VK(i+1) ist hier in der Nähe der Strömungspfadmitte stromab der Hinterkante HK(i) angeordnet. In einem Teil des Bereiches zwischen der Hauptströmungspfadmitte und der Hauptströmungspfadberandung liegt die Vorderkante VK(i+1) stromauf der Hinterkante (HK(i), entsprechend negativen Werten von D, ist aber an der Hauptströmungspfadberandung wieder mit positiven Werten von D vorgesehen. Auf diese Weise nimmt der meridionale Kantenabstand D in Richtung der Hauptströmungspfadberandung zunächst ab, dann aber wieder zu und ist an der Hauptströmungspfadberandung maximal. Kennzeichnend für die in Fig. 4 dargestellten beispielhaften Lösungen ist der im Wesentlichen annähernd gerade Verlauf der Hinterkante HK(i) im Bereich zwischen Hauptströmungspfadmitte und Hauptströmungspfadberandung, wobei das Maximum des meridionalen Kantenabstandes D durch einen kurvenhaften Verlauf der Vorderkante (i+1) erzeugt wird.

Fig. 5 zeigt ebenfalls Lösungen mit einer im Wesentlichen annähernd gerade verlaufenden Hinterkante HK(i). Entsprechend dieser vorteilhaften Ausgestaltung einer erfindungsgemäßen Schaufelreihengruppe, nimmt hier der meridionale Kantenabstand D in Richtung der Strömungspfadberandung zunächst über einen Abschnitt der Hauptströmungspfadhöhe zu, nahe an der Hauptströmungspfadberandung ist jedoch eine Veringerung von D vorgesehen. In dem dargestellten Beispiel resultiert im Bereich zwischen der Hauptströmungspfadmitte und der Hauptströmungspfadberandung aufgrund der im Wesentlichen geraden Hinterkante HK(i) ein S-förmigen Verlauf der Vorderkante VK(i+1). Das Maximum von D befindet sich folglich im Bereich zwischen der Hauptströmungspfadmitte und der Hauptströmungspfadberandung. Erfindungsgemäß besonders günstig ist es, das Maximum im Bereich zwischen der Hauptströmungspfadberandung und einer im Abstand 0,6*LM von der Hauptströmungspfadberandung entfernt gelegenen Grenze vorzusehen, siehe Fig. 8. Weiterhin ist es besonders günstig, wenn die Vorderkante VK(i+1) in der hier stets betrachteten Meridianebene zur Schaffung des erfindungsgemäßen Verlaufes von D entlang der Hauptströmungspfadhöhe an der Hauptströmungspfadberandung eine positive Pfeilung aufweist, gemäß eines Neigungswinkels ϕ von ϕ < 90°.

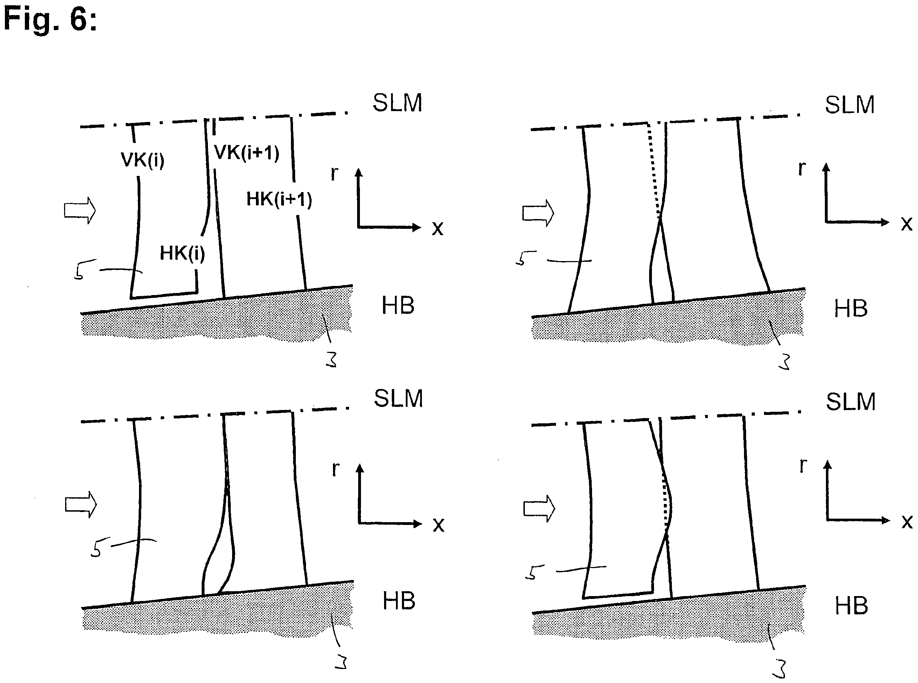

Fig. 6 zeigt schließlich Lösungen mit einer geschwungen verlaufenden Hinterkante HK(i), wobei die links unten abgebildete Schaufelreihengruppe eine erfindungsgemäße Ausgestaltung darstellt und die übrigen Darstellungen der Fig. 6 weitere beispielhafte Ausgestaltungen. Entsprechend dieser vorteilhaften Ausgestaltung wird der erfindungsgemäße Verlauf des meridionalen Kantenabstandes D in Richtung der Strömungspfadberandung bei einer im Wesentlichen annähernd geraden oder an der Hauptströmungspfadberandung gepfeilten Vorderkante VK(i+1) erreicht.

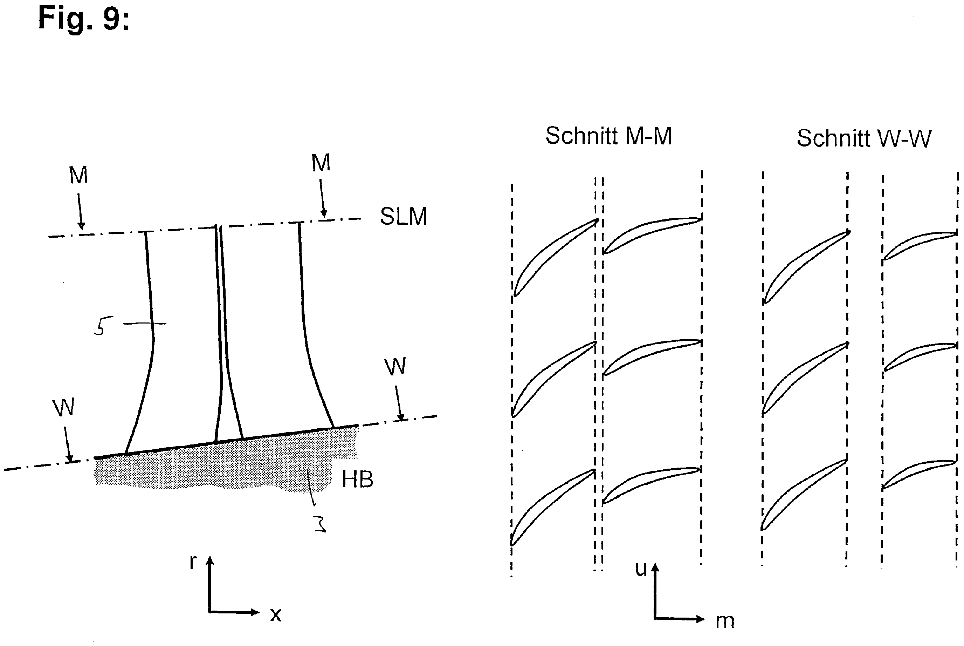

Die linke Seite der Fig. 9 zeigt eine beispielhafte Anordnung, bei der beide den meridionalen Kantenabstand bestimmenden Kanten, die Hinterkante HK(i) und die Vorderkante VK(i+1), einen voneinander weg weisenden Verlauf nehmen, wobei diese zwei Kanten (bei Vernachlässigung ihrer Krümmung) mit der Hauptströmungspfadberandung eine Konfiguration bilden, die einem gleichschenkligen Dreieck ähnlich ist. Dies tritt insbesondere dann ein, wenn die zwei Kanten HK(i) und VK(i+1) in einem Teil oder Punkt des Hauptströmungspfadinneren deckungsgleich sind oder VK(i+1) stromauf von HK(i) und somit innerhalb des beschaufelten Raumes der Mitgliedsschaufelreihe (i) liegt. Die dargestellte Hälfte der Mitgliedsschaufelreihen nehmen dann im Bereich der Schaufelenden eine Form an, die dem Fuß des Eiffelturmes ähnelt.

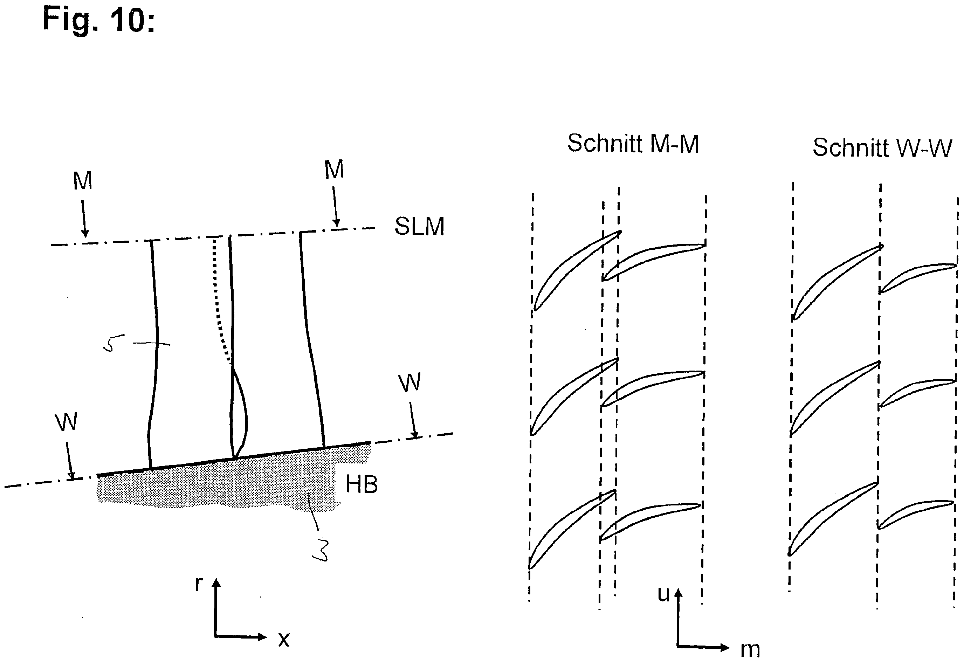

Besondere erfindungsgemäße Lösungen zeigen demnach in einem Teil des Bereiches zwischen der Hauptströmungspfadmitte und der Hauptströmungspfadberandung in Richtung der Hauptströmungspfadberandung ein Austreten der Vorderkante VK(i+1) aus dem beschaufelten Zone der Mitgliedsschaufelreihe (i), gegebenenfalls verbunden mit einem Eintreten der Vorderkante VK(i+1) in den beschaufelten Zone der Mitgliedsschaufelreihe (i) an einer im Hauptströmungspfad weiter innen liegenden Position, siehe auch Fig. 10, linke Seite.

Die rechte Seite der Fig. 9 zeigt eine beispielhafte Anordnung der betrachteten zwei Mitgliedsschaufelreihen in der von der Meridionalkoordinate m und der Umfangsrichtung u gebildeten Ebene. Eine entsprechende Umfangsabwicklung ist für den Schnitt M-M in Hauptströmungspfadmitte und einen Schnitt W-W an der Hauptströmungspfadberandung dargestellt. Die zwei Mitgliedsschaufelreihen besitzen die gleiche Schaufelanzahl, wobei in Umfangsrichtung u betrachtet eine Schaufel der Reihe (i+1) stets näher an einer Druckseite einer Schaufel der Reihe (i) vorgesehen ist.

Die Fig. 10 zeigt in gleicher Weise eine erfindungsgemäße Anordnung mit ineinander greifenden Kanten HK(i) und VK(i+1) und einem in der Nähe der Hauptströmungspfadberandung vorgesehenen Maximum des meridionalen Kantenabstandes D.

Von begünstigender Bedeutung für eine erfindungsgemäße Statorschaufelreihengruppe ist eine Anordnung, bei der, in Hauptströmungsrichtung betrachtet, sowohl stromauf als auch stromab der erfindungsgemäßen Statorschaufelreihengruppe eine Rotorschaufelreihe oder eine Rotorschaufelreihengruppe vorgesehen ist.

Weiterhin von begünstigender Bedeutung für eine erfindungsgemäße Rotorschaufelreihengruppe ist eine Anordnung, bei der, in Hauptströmungsrichtung betrachtet, sowohl stromauf als auch stromab der erfindungsgemäßen Rotorschaufelreihengruppe eine Statorschaufelreihe oder eine Statorschaufelreihengruppe vorgesehen ist.

Ebenfalls von günstiger Wirkung ist eine erfindungsgemäße Größenrelation der meridionalen Länge LM in der Hauptströmungspfadmitte und der der meridionalen Länge LW an der Hauptströmungspfadberandung: LW > LM. Besonders günstig ist es dabei, wenn wenigstens eine der Mitgliedsschaufelreihen (i) und (i+1) an der Hauptströmungspfadberandung ihre individuell maximale meridionale Länge aufweist, oder an der Hauptströmungspfadberandung eine individuell größere meridionale Länge vorliegt als an der Hauptströmungspfadhöhe des minimalen meridionalen Kantenabstandes D.

Die vorliegende Erfindung erlaubt eine deutlich höhere aerodynamische Belastbarkeit von Rotoren und Statoren in Strömungsarbeitmaschinen, bei gleichbleibendem oder erhöhtem Wirkungsgrad. Eine Reduzierung der Teilezahl und des Komponentengewichts von mehr als 20% scheint erreichbar.

### Bezugszeichenliste

- 1: Gehäuse
- 2: Ringkanal/Hauptströmungspfad
- 3: Rotortrommel (Nabe)
- 4: Maschinenachse
- 5: Schaufel / Schaufelreihe

## Patentansprüche

1. Strömungsmaschine mit einer Schaufelreihengruppe, angeordnet in einem Hauptströmungspfad einer Strömungsmaschine und bestehend aus N benachbarten und sowohl in Meridionalrichtung m als auch in Umfangsrichtung u relativ zueinander fest angeordneten Mitgliedsschaufelreihen, wobei die Anzahl N der Mitgliedsschaufelreihen ≥ 2 ist und (i) den Laufindex mit Werten zwischen 1 und N kennzeichnet, wobei in der durch die Axialrichtung x und die Radialrichtung r gebildeten Meridianebene die Hinterkante HK(i) mindestens einer Schaufel der Mitgliedsschaufelreihe (i) von der Vorderkante VK(i+1) mindestens einer Schaufel der benachbarten stromabwärts angeordneten Mitgliedsschaufelreihe (i+1) um den meridionalen Kantenabstand D entfernt vorgesehen ist, wobei der Wert des Kantenabstandes D entlang der Höhe des Hauptströmungspfades wenigstens entlang eines Teils des Bereiches zwischen der Hauptströmungspfadmitte und der Hauptströmungspfadberandung zur Hauptströmungspfadberandung hin ansteigt und einen Maximalwert annimmt, wobei die Hauptströmungspfadberandung durch eine der Naben- und Gehäusekonturen der Strömungsmaschine gebildet wird, wobei der Maximalwert des meridionalen Kantenabstandes D nicht an der Hauptströmungspfadberandung vorgesehen ist, **dadurch gekennzeichnet, dass** wenigstens eine der Schaufelvorderkanten VK(i) und VK(i+1) an der Hauptströmungspfadberandung eine positive Pfeilung aufweist, entsprechend einem zwischen der betreffenden Schaufelkante und der Hauptströmungspfadberandung in der Meridianebene gemessenen Neigungswinkel φ von kleiner 90°.

2. Strömungsmaschine nach Anspruch 1, **dadurch gekennzeichnet, dass** der Maximalwert des Kantenabstandes D um wenigstens 2% der zwischen der Vorderkante VK(i) und der Hinterkante HK(i+1) in der Hauptströmungspfadmitte vorgesehenen meridionalen Distanz LM größer ist als der minimale im Bereich zwischen der Hauptströmungspfadmitte und der Hauptströmungspfadberandung auftretende meridionale Kantenabstand D.

3. Strömungsmaschine nach einem der Ansprüche 1 oder 2, **dadurch gekennzeichnet, dass** die Hauptströmungspfadberandung fest mit dem Schaufelende einer Schaufel mindestens einer Mitgliedsschaufelreihe verbunden ist.

4. Strömungsmaschine nach einem der Ansprüche 1 oder 2, **dadurch gekennzeichnet, dass**, ein Spalt zwischen der Hauptströmungspfadberandung und mindestens dem Schaufelende einer Schaufel einer Mitgliedsschaufelreihe vorgesehen ist.

5. Strömungsmaschine nach einem der Ansprüche 1 bis 4, **dadurch gekennzeichnet, dass** die Anzahl der Schaufeln zweier benachbarter Mitgliedsschaufelreihen in einem ganzzahligen Verhältnis stehen, derart, dass die Anzahl der Schaufeln der Mitgliedsschaufelreihe (i) ein Vielfaches der Anzahl der Schaufeln der Mitgliedsschaufelreihe (i+1) bildet, oder die Anzahl der Schaufeln der Mitgliedsschaufelreihe (i+1) ein Vielfaches der Anzahl der Schaufeln der Mitgliedsschaufelreihe (i) bildet, oder die Anzahl der Schaufeln der Mitgliedsschaufelreihe (i) und die Anzahl der Schaufeln der Mitgliedsschaufelreihe (i+1) gleich sind.

6. Strömungsmaschine nach einem der Ansprüche 1 bis 5, **dadurch gekennzeichnet, dass** in der Mitte des Hauptströmungspfades die Vorderkante VK(i+1) im Bereich zwischen der Vorderkante VK(i) und 5% der meridionalen Profiltiefe LM der Mitgliedsschaufelreihe (i) stromab der Hinterkante HK(i) vorgesehen ist.

7. Strömungsmaschine nach einem der Ansprüche 1 bis 6, **dadurch gekennzeichnet, dass** der Maximalwert des meridionalen Kantenabstandes D im Bereich zwischen einer im Abstand 0,6*LM von der Hauptströmungspfadberandung entfernt gelegenen Grenze und der Hauptströmungspfadberandung selbst vorgesehen ist.

8. Strömungsmaschine nach einem der Ansprüche 1 bis 7, **dadurch gekennzeichnet, dass** der Maximalwert des meridionalen Kantenabstandes D weitestmöglich an der Hauptströmungspfadberandung, d. h. im Fall von festen Schaufelenden direkt an der Hauptströmungspfadberandung und im Fall von Schaufelenden mit Spalt direkt am Schaufelende, vorgesehen ist.

9. Strömungsmaschine nach einem der Ansprüche 1 bis 8, **dadurch gekennzeichnet, dass** mindestens eine der Schaufelkanten HK(i) und VK(i+1) an der Hauptströmungspfadberandung im Wesentlichen senkrecht zur Hauptströmungspfadberandung ausgerichtet ist, entsprechend einem zwischen der betreffenden Schaufelkante und der Hauptströmungspfadberandung in der Meridianebene gemessenen Neigungswinkel φ von 87°< φ < 93°.

10. Strömungsmaschine nach einem der Ansprüche 8 oder 9, **dadurch gekennzeichnet, dass** der meridionale Kantenabstand D wenigstens entlang eines Teiles des Bereiches zwischen der Hauptströmungspfadmitte und der Hauptströmungspfadberandung bis an die Hauptströmungspfadberandung kontinuierlich zunimmt und dort sein Maximum besitzt.

11. Strömungsmaschine nach einem der Ansprüche 1 bis 10, **dadurch gekennzeichnet, dass** die Mitgliedsschaufelreihen (i) und (i+1) sich wenigstens teilweise in Meridionalströmungsrichtung überlappen, sodass die Vorderkante VK(i+1) wenigstens entlang eines Teiles des Bereichs zwischen der Hauptströmungspfadmitte und der Hauptströmungspfadberandung stromauf der Hinterkante HK(i) vorgesehen ist, resultierend in örtlichen Werten des meridionalen Kantenabstandes D von kleiner 0.

12. Strömungsmaschine nach einem der Ansprüche 1 bis 11, **dadurch gekennzeichnet, dass** die Vorderkante VK(i+1) und die Hinterkante HK(i) in der Meridianansicht im Bereich zwischen der Hauptströmungspfadmitte und der Hauptströmungspfadberandung einen Schnittpunkt bilden, in dem bei Betrachtung in Richtung der Strömungspfadberandung das Vorzeichen des meridionalen Kantenabstand D von negativ zu positiv wechselt.

13. Strömungsmaschine nach einem der Ansprüche 1 bis 12, **dadurch gekennzeichnet, dass** in der Meridianansicht wenigstens eine der Schaufelkanten HK(i) und VK(i+1) in wenigstens einem Teil des Bereiches zwischen der Hauptströmungspfadmitte und der Hauptströmungspfadberandung einen S-förmigen Verlauf zeigt.

14. Strömungsmaschine nach einem der Ansprüche 1 bis 13, **dadurch gekennzeichnet, dass** in der Meridianansicht wenigstens eine der Schaufelkanten HK(i) und VK(i+1) im Bereich zwischen der Hauptströmungspfadmitte und der Hauptströmungspfadberandung einen im Wesentlichen geradlinigen Verlauf zeigt.

15. Strömungsmaschine nach einem der Ansprüche 1 bis 14, **dadurch gekennzeichnet, dass** die meridionale Länge LM in der Hauptströmungspfadmitte kleiner ist als die meridionale Länge LW an der Hauptströmungspfadberandung.

16. Strömungsmaschine nach einem der Ansprüche 1 bis 15, **dadurch gekennzeichnet, dass** wenigstens eine der Mitgliedsschaufelreihen (i) und (i +1) an der Hauptströmungspfadberandung ihre individuell maximale meridionale Länge aufweist, oder an der Hauptströmungspfadberandung eine individuell größere meridionale Länge vorliegt als an der Hauptströmungspfadhöhe des minimalen meridionale in Kantenabstandes D.

## Claims

1. Fluid-flow machine with a blade row group arranged in a main flow path of a fluid-flow machine and including N adjacent member blade rows firmly arranged relative to each other in both the meridional direction m and the circumferential direction u, with the number N of the member blade rows being greater than/ equal to 2 and (i) designating the running index with values between 1 and N, with the trailing edge HK(i) of at least one blade of the member blade row (i) being spaced from the leading edge VK(i+1) of at least one blade of the adjacent, downstream member blade row (i+1) by the meridional edge distance D in the meridional plane established by the axial direction x and the radial direction r, with the value of the edge distance D along the height of the main flow path increasing towards the main flow path boundary at least along a part of the area between the main flow path center and the main flow path boundary and assuming a maximum value, with the main flow path boundary being formed by one of the hub and casing contours of the fluid-flow machine, with the maximum value of the meridional edge distance D not being provided at the main flow path boundary, **characterized in that** at least one of the blade leading edges VK(i) and VK(i+1) has positive sweep at the main flow path boundary, corresponding to an inclination angle ϕ of less than 90° measured between the respective blade edge and the main flow path boundary in the meridional plane.

2. Fluid-flow machine in accordance with Claim 1, **characterized in that** the maximum value of the edge distance D is larger than the minimum meridional edge distance D occurring in the area between the main flow path center and the main flow path boundary by at least 2% of the meridional distance LM provided between the leading edge VK(i) and the trailing edge HK(i+1) in the main flow path center.

3. Fluid-flow machine in accordance with one of the Claims 1 or 2, **characterized in that** the main flow path boundary is firmly connected to the blade end of a blade of at least one member blade row.

4. Fluid-flow machine in accordance with one of the Claims 1 or 2, **characterized in that** a gap between the main flow path boundary and at least the blade end of a blade of a member blade row is provided.

5. Fluid-flow machine in accordance with one of the Claims 1 to 4, **characterized in that** the numbers of blades of two adjacent member blade rows are in an integer ratio to each other, such that the number of blades of the member blade row (i) is a multiple of the number of blades of the member blade row (i+1) or the number of blades of the member blade row (i+1) is a multiple of the number of blades of the member blade row (i) or the number of blades of the member blade row (i) equals the number of blades of the member blade row (i+1).

6. Fluid-flow machine in accordance with one of the Claims 1 to 5, **characterized in that** in the center of the main flow path, the leading edge VK(i+1) is provided downstream of the trailing edge HK(i) in the area between the leading edge VK(i) and 5% of the meridional profile depth LM of the member blade row (i).

7. Fluid-flow machine in accordance with one of the Claims 1 to 6, **characterized in that** the maximum value of the meridional edge distance D is provided in the area between a limit situated 0.6*LM off the main flow path boundary and the main flow path boundary itself.

8. Fluid-flow machine in accordance with one of the Claims 1 to 7, **characterized in that** the maximum value of the meridional edge distance D is provided as far as possible at the main flow path boundary, i.e. directly at the main flow path boundary in the case of firm blade ends, and directly at the blade end in the case of blade ends with gap.

9. Fluid-flow machine in accordance with one of the Claims 1 to 8, **characterized in that** at least one of the blade edges HK(i) and VK(i+1) at the main flow path boundary is aligned essentially perpendicular to the main flow path boundary, corresponding to an inclination angle ϕ of 87°< ϕ < 93° measured between the respective blade edge and the main flow path boundary in the meridional plane.

10. Fluid-flow machine in accordance with one of the Claims 8 or 9, **characterized in that** the meridional edge distance D at least along a part of the area between the main flow path center and the main flow path boundary continually increases up to the main flow path boundary and assumes its maximum value there.

11. Fluid-flow machine in accordance with one of the Claims 1 to 10, **characterized in that** the member blade rows (i) and (i+1) at least partly overlap each other in the meridional flow direction, so that the leading edge VK(i+1) is provided at least along a part of the area between the main flow path center and the main flow path boundary upstream of the trailing edge HK(i), resulting in local values of the meridional edge distance D of less than 0.

12. Fluid-flow machine in accordance with one of the Claims 1 to 11, **characterized in that** the leading edge VK(i+1) and the trailing edge HK(i), in the meridional view, in the area between the main flow path center and the main flow path boundary, form a point of intersection, in which, when viewed in the direction of the flow path boundary, the sign of the meridional edge distance D changes from negative to positive.

13. Fluid-flow machine in accordance with one of the Claims 1 to 12, **characterized in that** in the meridional view at least one of the blade edges HK(i) and VK(i+1) shows an S-shaped course in at least a part of the area between the main flow path center and the main flow path boundary.

14. Fluid-flow machine in accordance with one of the Claims 1 to 13, **characterized in that** in the meridional view at least one of the blade edges HK(i) and VK(i+1) shows an essentially rectilinear course in the area between the main flow path center and the main flow path boundary.

15. Fluid-flow machine in accordance with one of the Claims 1 to 14, **characterized in that** the meridional length LM in the main flow path center is less than the meridional length LW at the main flow path boundary.

16. Fluid-flow machine in accordance with one of the Claims 1 to 15, **characterized in that** at least one of the member blade rows(i) and (i+1) has its individually maximum meridional length at the main flow path boundary, or that there is an individually larger meridional length at the main flow path boundary than at the main flow path height of the minimum meridional edge distance D.

## Revendications

1. Machine à écoulement avec un groupe de rangées d'aubes disposé dans une voie d'écoulement principale d'une machine à écoulement et constitué de N rangées d'aubes membres adjacentes disposées de manière fixe les unes par rapport aux autres aussi bien dans le sens méridional m que dans le sens circonférentiel u, sachant que le nombre N des rangées d'aubes membres est supérieur/ égal à 2 et que (i) désigne l'indice courant avec des valeurs comprises entre 1 et N, sachant que dans le plan méridional formé par le sens axial x et le sens radial r, le bord de fuite HK(i) d'au moins une aube de la rangée d'aubes membres (i) est éloigné du bord d'attaque VK(i+1) d'au moins une aube de la rangée d'aubes membres (i+1) adjacentes disposées en aval, d'une distance correspondant à l'écart de bord D méridional, sachant que la valeur de l'écart de bord D augmente le long de la hauteur de la voie d'écoulement principale, en direction de la bordure de la voie d'écoulement principale, au moins le long d'une partie de la zone comprise entre le centre de la voie d'écoulement principale et la bordure de la voie d'écoulement principale et adopte une valeur maximale, sachant que la bordure de la voie d'écoulement principale est constituée par un des contours du moyeu et du carter de la machine à écoulement, sachant que la valeur maximale de l'écart de bord méridional D n'est pas prévue sur la bordure de la voie d'écoulement principale, **caractérisée en ce qu'**au moins un des bords d'attaque d'aube VK(i) et VK(i+1) sur la bordure de la voie d'écoulement principale présente une flèche positive, correspondant à un angle d'inclinaison ϕ de moins de 90° mesuré entre le bord d'aube concerné et la bordure de la voie d'écoulement principale dans le plan méridional.

2. Machine à écoulement selon la revendication n° 1, **caractérisée en ce que** la valeur maximale de l'écart de bord D est supérieure à l'écart de bord méridional minimal D apparaissant dans la zone située entre le centre de la voie d'écoulement principale et la bordure de la voie d'écoulement principale, d'au moins 2 % de la distance méridionale LM prévue entre le bord d'attaque VK(i) et le bord de fuite HK(i+1) dans le centre de la voie d'écoulement principale.

3. Machine à écoulement selon une des revendications n° 1 ou n° 2, **caractérisée en ce que** la bordure de la voie d'écoulement principale est reliée de manière fixe à l'extrémité d'une aube d'au moins une rangée d'aubes membres.

4. Machine à écoulement selon une des revendications n° 1 ou n° 2, **caractérisée en ce qu'**est prévue une fente entre la bordure de la voie d'écoulement principale et au moins l'extrémité d'une aube d'une rangée d'aubes membres.

5. Machine à écoulement selon une des revendications n° 1 à n° 4, **caractérisée en ce que** les nombres d'aubes de deux rangées d'aubes membres adjacentes correspondent à un rapport entier de sorte que le nombre d'aubes de la rangée d'aubes membres (i) est un multiple du nombre d'aubes de la rangée d'aubes membres (i+1), ou que le nombre d'aubes de la rangée d'aubes membres (i+1) est un multiple du nombre d'aubes de la rangée d'aubes membres (i), ou que le nombre d'aubes de la rangée d'aubes membres (i) est identique au nombre d'aubes de la rangée d'aubes membres (i+1).

6. Machine à écoulement selon une des revendications n° 1 à n° 5, **caractérisée en ce qu'**au centre de la voie d'écoulement principale, le bord d'attaque VK(i+1) est prévu en aval du bord de fuite HK(i), dans la zone située entre le bord d'attaque VK(i) et 5 % de la profondeur de profil méridionale LM de la rangée d'aubes membres (i).

7. Machine à écoulement selon une des revendications n° 1 à n° 6, **caractérisée en ce que** la valeur maximale de l'écart de bord méridional D est prévue dans la zone située entre une limite éloignée de 0,6*LM de la bordure de la voie d'écoulement principale et la bordure de la voie d'écoulement principale elle-même.

8. Machine à écoulement selon une des revendications n° 1 à n° 7, **caractérisée en ce que** la valeur maximale de l'écart de bord méridional D est prévue autant que possible sur la bordure de la voie d'écoulement principale, c.-à-d. directement sur la bordure de la voie d'écoulement principale en cas d'extrémités d'aubes fixes et directement sur l'extrémité d'aube en cas d'extrémités d'aubes avec fente.

9. Machine à écoulement selon une des revendications n° 1 à n° 8, **caractérisée en ce qu'**au moins un des bords d'aube HK(i) et VK(i+1) sur la bordure de la voie d'écoulement principale est orienté essentiellement perpendiculairement à la bordure de la voie d'écoulement principale, selon un angle d'inclinaison ϕ tel que 87° < ϕ < 93° mesuré entre le bord d'aube concerné et la bordure de la voie d'écoulement principale dans le plan méridional.

10. Machine à écoulement selon une des revendications n° 8 ou n° 9, **caractérisée en ce que** l'écart de bord méridional D au moins le long d'une partie de la zone située entre le centre de la bordure de la voie d'écoulement principale et la bordure de la voie d'écoulement principale augmente continuellement jusqu'à la bordure de la voie d'écoulement principale et y adopte sa valeur maximale.

11. Machine à écoulement selon une des revendications n° 1 à n° 10, **caractérisée en ce que** les rangées d'aubes membres (i) et (i+1) se chevauchent au moins partiellement dans le sens d'écoulement méridional de sorte que le bord d'attaque VK(i+1) est prévu au moins le long d'une partie de la zone située entre le centre de la voie d'écoulement principale et la bordure de la voie d'écoulement principale, en amont du bord de fuite HK(i), conduisant à des valeurs locales de l'écart de bord méridional D inférieures à 0.

12. Machine à écoulement selon une des revendications n° 1 à n° 11, **caractérisée en ce que** le bord d'attaque VK(i+1) et le bord de fuite HK(i) en vue méridionale dans la zone située entre le centre de la voie d'écoulement principale et la bordure de la voie d'écoulement principale forment un point d'intersection dans lequel le signe de l'écart de bord méridional D passe de négatif à positif, observé dans le sens de la bordure de la voie d'écoulement principale.

13. Machine à écoulement selon une des revendications n° 1 à n° 12, **caractérisée en ce qu'**en vue méridionale, au moins un des bords d'aubes HK(i) et VK(i+1) présente un tracé en forme de S dans au moins une partie de la zone située entre le centre de la voie d'écoulement principale et la bordure de la voie d'écoulement principale.

14. Machine à écoulement selon une des revendications n° 1 à n° 13, **caractérisée en ce qu'**en vue méridionale, au moins un des bords d'aubes HK(i) et VK(i+1) présente pour l'essentiel un tracé rectiligne dans la zone située entre le centre de la voie d'écoulement principale et la bordure de la voie d'écoulement principale.

15. Machine à écoulement selon une des revendications n° 1 à n° 14, **caractérisée en ce que** la longueur méridionale LM au centre de la voie d'écoulement principale est inférieure à la longueur méridionale LW sur la bordure de la voie d'écoulement principale.

16. Machine à écoulement selon une des revendications n° 1 à n° 15, **caractérisée en ce qu'**au moins une des rangées d'aubes membres (i) et (i+1) présente sa longueur méridionale individuellement maximale sur la bordure de la voie d'écoulement principale, ou qu'existe sur la bordure de la voie d'écoulement principale, une longueur méridionale individuellement supérieure à celle présente sur la hauteur de la voie d'écoulement principale de l'écart de bord méridional minimal D.
